# EUROPEAN PATENT APPLICATION

(11) **EP 4 327 654 A1**
(43) Date of publication of application: **28.02.2024**
(21) Application number: 22382796.5
(22) Date of filing: 23.08.2022
(51) Int. Cl.: A01M 1/20

(54) **DEVICE FOR EVAPORATING VOLATILE SUBSTANCES**

(71) Applicant: Zobele Holding SpA, 38100 Trento (IT)
(72) Inventor: DEFLORIAN, Stefano, 38100 TRENTO (IT); SORDO, Walter, 38100 TRENTO (IT); MORHAIN, Cedric, 08019 BARCELONA (ES)
(74) Representative: Herrero & Asociados, S.L.

(57) **Abstract**

Device for evaporating volatile substances, comprising a porous element (1) that is impregnated with a product including the volatile substances; a heater (2) that heats the porous element (1) for evaporating the volatile substances; wherein the porous element (1) and the heater (2) have a cylindrical shape, the heater (2) being placed around the porous element (1).

It permits to provide a device for evaporating volatile substances, comprising a solid porous support with a high capacity of absorption of the volatile substances that is placed directly in relation with a heating element.

## Description

The present invention relates to a device for evaporating volatile substances, in particular, a portable device for evaporating volatile substances.

### Background of the invention

The two most important categories of electrical heating devices for evaporating volatile substances are mainly systems with a bottle and a wick, and systems with an impregnated tablet.

Tablets use to be for substances requiring low evaporation rate and short duration, due to their low capacity of content. One example of these kind of tablets are insecticide tablets for indoor applications. These tablets have a flat configuration, so that mostly all of its surface is heated, and they must be changed just after a few hours of use. The typical amount of insecticide required indoor is approx. 0.5 -2 mg/h. Capacity of a flat mat is in the range of hundreds of milligrams.

Bottles with a wick use to be for higher output and higher duration. Examples of this kind of bottles with a wick are air fresheners or pest control device, which last during several weeks, and sometime are also used outdoors.

In these cases, the wick is impregnated continuously with the liquid containing the volatile substances of the bottle, and the bottle must be sealed to prevent the liquid to be evaporated. Typical evaporation rate of such products is 30-60 mg/h. Capacity of the bottle is generally between 20 to 40 ml (approx. 20 to 40g)

Electrical heating devices for evaporating volatile substances require quite some energy to achieve the target evaporation rate and the target duration, so a direct connection to a continuous relevant source of energy is necessary.

Therefore, these kind of evaporation devices are not a solution for effective release of volatile substances in high quantity per hour but for a short duration, e.g., less than one day, and they are powered by a small non continuous energy source, such as a rechargeable battery.

### Disclosure of the invention

Therefore, an objective of the present invention is to provide a device for evaporating volatile substances, comprising a solid porous support with a high capacity of absorption of the volatile substances that is placed directly in relation with a heating element.

With the device for evaporating volatile substances according to the present invention said disadvantages are solved, presenting other advantages that will be described below.

The device for evaporating volatile substances is described in claim 1, and further optional features are included in the dependent claims.

In particular, the device for evaporating volatile substances according to the present invention comprises:
- a porous element that is impregnated with a product including the volatile substances;
- a heater that heats the porous element for evaporating the volatile substances; wherein the porous element and the heater have a cylindrical shape, the heater being placed around the porous element.

Preferably, the height of the porous element is greater than the height of the heater, the ratio between the heights of the heater and the porous element being between 30%-60%, so to improve the capability to evaporate in a more constant way, i.e., beginning to the end the liquid insecticide that impregnate the porous element.

This improvement is related to the progressive redistribution of the insecticide in the porous element while it evaporates. Exposing more porous element areas to the heat allows a more effective capability of evaporation all the insecticide in a constant and energy effective way.

Furthermore, the heater is preferably placed in a centered position with respect to the height of the of the porous element.

The device for evaporating volatile substances according to the present invention can also comprise a reflective element placed around the heater.

Advantageously, the porous element is mounted on a support that allow the correct positioning of the porous element through, e.g., longitudinal ribs.

Furthermore, the heater has preferably a variable heating capacity, which is progressively increased. To this end, the heater is connected to an electric power source, e.g., a battery, and to a control unit, that determines the electric power provided to the heater, that is increased progressively. This progressive heating is aimed to compensate the reduction of evaporation of the active ingredient.

Furthermore, preferably the diameter of the porous element is comprised between 4 to 8 mm, and there is an air gap between the porous element and the heater comprised between 1 mm to 3 mm.

These values are not just a design option, but they provide an optimized operation of the device according to the present invention, because making them bigger would not be energy effective, and making them smaller would reduce the energy transfer and evaporation effectiveness.

### Brief description of the drawings

For better understanding of what has been disclosed, some drawings in which, schematically and only by way of a non-limiting example, a practical case of embodiment is shown.

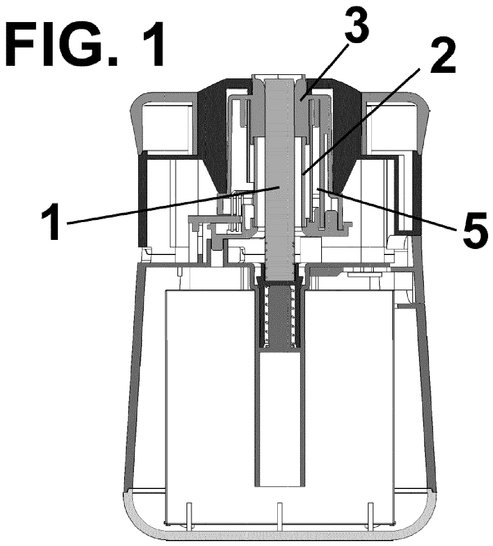

Figure 1 is a sectioned elevation view of the device for evaporating volatile substances according to the present invention.

### Description of a preferred embodiment

The device for evaporating volatile substances according to the present invention comprises a porous element 1, that in the shown embodiment is a porous cylindrical element made of fiber with a capacity absorption higher than 100% per weight.

This porous element 1 is impregnated with a product that contains the volatile substances. It must be pointed out that the porous element 1 is not in contact with a liquid, as usual in some devices for evaporating volatile substances, but it incorporates the product in the porous element 1.

The device for evaporating volatile substances according to the present invention also comprises a heater 2, also having a cylindrical geometry, according to the embodiment shown. This heater 2 can be, for example, ceramic.

Preferably, the diameter of the porous element is comprised between 4 to 8 mm, and there is an air gap between the porous element and the heater comprised between 1 mm to 3 mm.

These values are not just a design option, but they provide an optimized operation of the device according to the present invention, because making them bigger would not be energy effective, and making them smaller would reduce the energy transfer and evaporation effectiveness.

According to the preferred embodiment, the ratio between the heater 2 height and the porous element 1 length is between 30-50 %, for example, 40%, being the porous element 1 longer than the heater 2, as shown in figure 1. This ratio assures an optimized usage of the product including the volatile substances in the porous element 1, as its concentration in the porous element 1 reduces the time of redistribution in the porous element 1 by capillarity.

Furthermore, the heater 2 only surrounds the central portion of the porous element 1, i.e., it is not placed at the top side of the porous element 1. This permits a higher feeding of product to the central portion of the porous element 1 by capillarity.

The porous element 1 is designed to be used during a limited predetermined time period. Just as an example, in the porous element 1 the weight of the volatile substances is in the range of 2 grams for an evaporation of 100 mg/h for 20 hours.

Additionally, the porous element 1 is mounted on a support 3, that presses the porous element 1 during its use, so that the correct evaporation rate is achieved. This support 3 can be from an elastic material for applying this pressure to the porous element 1.

Furthermore, during the impregnation process of the porous element 1, it is pressurized when the product containing the volatile substances is applied to the porous element 1, and when the pressure is released, a very fast impregnation of the porous element 1 is obtained.

Additionally, the heater 2 is designed to increase the heating progressively to compensate the natural decrease of evaporation due to lower level of volatile substances in the porous element 1. The profile of this increase of the heating will be adjusted during the development of the product and will depend on the evaporation and viscosity of the insecticide formulation, the characteristics of the porous element, the heater construction and size. For example, for a heating element of 20 mm length and using a polyester fiber wick of 45 mm, the heating temperature passes from 110 to 140°C with a linear pattern, to maintain the evaporation rate between 87 to 91 mg/h.

To increase the heating of the porous element 1, the device for evaporating volatile substances according to the present invention can also comprise a reflective element 4 placed around the heater 2.

Although reference has been made to a specific embodiment of the invention, it is apparent to a person skilled in the art that the described device is susceptible of numerous variations and modifications, and that all the details mentioned can be replaced by other technically equivalents, without departing from the scope of protection defined by the appended claims.

## Claims

1. Device for evaporating volatile substances, comprising:
- a porous element (1) that is impregnated with a product including the volatile substances;
- a heater (2) that heats the porous element (1) for evaporating the volatile substances;
**characterized in that** the porous element (1) and the heater (2) have a cylindrical shape, the heater (2) being placed around the porous element (1).

2. Device for evaporating volatile substances according to claim 1, wherein the height of the porous element (1) is greater than the height of the heater (2), the ratio between the heights of the heater (2) and the porous element (1) being between 30%-60%.

3. Device for evaporating volatile substances according to claim 2, wherein the heater (2) is placed in a centered position with respect to the height of the of the porous element (1).

4. Device for evaporating volatile substances according to any one of the previous claims, wherein the device also comprises a reflective element (4) placed around the heater (2).

5. Device for evaporating volatile substances according to any one of the previous claims, wherein the porous element (1) is mounted on a support (3) that presses the porous element (1).

6. Device for evaporating volatile substances according to claim 5, wherein the support (3) is made from an elastic material.

7. Device for evaporating volatile substances according to any one of the previous claims, wherein the heater (2) has a variable heating capacity, which is progressively increased.

8. Device for evaporating volatile substances according to any one of the previous claims, wherein the diameter of the porous element (1) is comprised between 4 to 8 mm.

9. Device for evaporating volatile substances according to any one of the previous claims, wherein there is an air gap between the porous element (1) and the heater (2) comprised between 1 mm to 3 mm.
